(19) Europäisches Patentamt

European Patent Office

Office européen des brevets

(11) Veröffentlichungsnummer: **0 370 360**
**A2**

(12) **EUROPÄISCHE PATENTANMELDUNG**

(21) Anmeldenummer: **89121038.7**

(51) Int. Cl.⁵: **B01D 8/00**

(22) Anmeldetag: **14.11.89**

(30) Priorität: **19.11.88 DE 3839116**

(43) Veröffentlichungstag der Anmeldung:
**30.05.90 Patentblatt 90/22**

(84) Benannte Vertragsstaaten:
**AT BE CH DE FR GB LI NL**

(71) Anmelder: **Forschungszentrum Jülich GmbH**
**Postfach 1913**
**D-5170 Jülich(DE)**

(72) Erfinder: **Müller, Klaus Peter**
**Kreisbahnstrasse 22**
**D-5170 Jülich(DE)**
Erfinder: **Rudolph, Jochen, Dr.**
**Amselweg 9**
**D-5165 Hürtgenwald(DE)**

(54) **Vorrichtung zur Zwischenanreicherung von Spurenstoffen aus einem Gasstrom in einer Kühlfalle.**

(57) Zur Zwischenanreicherung von Spurenstoffen aus einem Gasstrom dient eine von diesem durchströmte, ggf. Adsorbermaterial enthaltende Kühlfalle, die von einem gasdichten Doppelmantel umschlossen wird, in den über ein unteres Verlängerungsrohr Kühlflüssigkeit aus einem umgebenden Kühlbad eindringen kann. Für die Desorption wird die Kühlflüssigkeit ventilgesteuert mittels Druckluft aus dem Doppelmantel vertrieben. Eine mit dem Doppelmantel verbundene Rohrschleife mit Heizwicklung und Zirkulationspumpe ermöglicht eine rasche Erwärmung der Kühlfalle. Mit der Druckluftleitung verbundene Mittel zur Niveauregulierung gestatten eine empfindliche Pegeleinstellung im unteren Verlängerungsrohr des Doppelmantels während der Desorptionsphase.

FIG. 1

EP 0 370 360 A2

## Vorrichtung zur Zwischenanreicherung von Spurenstoffen aus einem Gasstrom in einer Kühlfalle

Die Erfindung bezieht sich auf eine Vorrichtung zur Zwischenanreicherung von Spurenstoffen aus einem Gasstrom in einer durchströmten ggf. Adsorbermaterial enthaltenden Kühlfalle, die während der Anreicherungs phase in Kühlflüssigkeit eines Kühlbades eintaucht und zur Desorption (ggf. erwärmter) Luft bzw. Gas ausgesetzt wird.

Der Nachweis von Spurenstoffen in Gasen, insbesondere in Luft spielt in jüngster Zeit in Anbetracht der zunehmenden Belastung der Umwelt mit den verschiedensten zum Teil hoch giftigen oder für die Ökologie und Klimatologie hoch schädlichen Spurenstoffen eine erhebliche Rolle. Dabei reicht die Empfindlichkeit der Meßgeräte für den unmittelbaren Nachweis oft nicht aus, so daß eine Zwischenanreicherung der Spurenstoffe in einer Kühlfalle erforderlich wird, die in Kühlflüssigkeit taucht, aus der die Kühlfalle für den eigentlichen Nachweis (üblicherweise auf chromatographischem Wege) unter Erwärmung entnommen wird.

Von der Anmelderin wurde auch bereits eine Vorrichtung vorgeschlagen (DE-Patentanmeldung P 37 29 374.5 vom 03.09.1987), bei der eine U-förmige Kühlfalle umgeben von einem unten offenen wärmeisolierten Behältnis in verflüssigtes Gas als Kühlmittel taucht, das während der Kühlphase in das Behältnis gelassen wird, während die Kühlfalle zur Desorption aufgeheizt wird, wobei gleichzeitig Kühlmittel aus dem Behältnis verdrängt wird.

Üblicherweise wird dabei als Kühlmittel flüssiger Stickstoff oder flüssige Luft verwendet und die Aufheizung der Kühlfalle wird insbesondere durch eine elektrische Aufheizung der aus leitendem Material bestehenden Wandung der Kühlfalle vorgenommen.

Der Nachweis besonders geringer Spurenstoffgehalte von relativ instabilen Verbindungen, wie z. B. Peroxyacethylnitrat (PAN) unter Zuhilfenahme einer solchen Zwischenanreicherung hat zum einen den Nachteil, daß bei den relativ tiefen Temperaturen der verflüssigten Gase erhebliche Mengen an Begleitstoffen in der Kühlfalle gesammelt werden, die den Spurenstoffnachweis komplizieren können und zum anderen besteht die Gefahr, daß empfindliche Stoffe durch die unmittelbare Beheizung der Kühlfalle zersetzt werden.

Der Erfindung liegt daher die Aufgabe zugrunde, eine Vorrichtung zur Zwischenanreicherung von Spurenstoffen aus einem Gasstrom in einer Kühlfalle vorzusehen, bei der die Spurenstoffanreicherung nicht durch zusätzliche Akkumulation von erheblichen Mengen an Begleitstoffen belastet und die Aufwärmung zur Desorption schonend und vorzugsweise auch rasch erreicht werden kann.

Die zu diesem Zweck entwickelte erfindungsgemäße Vorrichtung ist dadurch gekennzeichnet, daß die Kühlfalle innerhalb des Kühlbades von einem gasdichten Mantel umschlossen wird, dessen unteres Ende eine insbesondere rohrförmig verlängerte Öffnung hat und der über zumindest ein Ventil mit der über der Kühlflüssigkeit im Kühlbad befindlichen Atmosphäre oder mit Druckluft bzw. -gas zu verbinden ist.

Weitere Besonderheiten ergeben sich aus den Unteransprüchen

Nachfolgend wird die Erfindung anhand eines Ausführungsbeispiels unter Bezugnahme auf die angefügten Zeichnungen beschrieben. Es zeigen Schematisch:

Figur 1 eine bevorzugte Ausführungsart der erfindungsgemäßen Vorrichtung und

Figur 2 eine bevorzugte Anordnung zur Niveauregulierung der aus der Umgebung der Kühlfalle verdrängten Kühlflüssigkeit

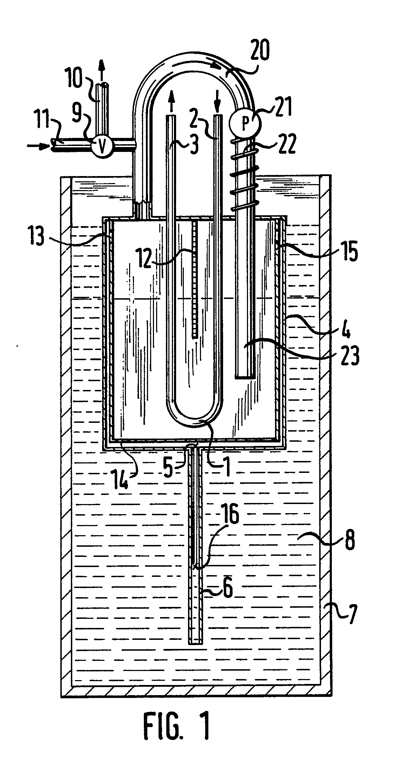

Gemäß Figur 1 ist eine als U-Rohr ausgebildete Kühlfalle 1, die von dem zu untersuchenden Gas durchströmt wird, das bei 2 zutritt und die Kühlfalle über 3 wieder verläßt, von einem gasdichten Mantel 4 umschlossen, dessen unteres Ende eine Öffnung 5 aufweist, die insbesondere, wie gezeigt, durch ein unten offenes Rohr 6 verlängert wird.

Diese Anordnung taucht in die in einem Kühlbad (Dewar-Gefäß) 7 vorhandene Kühlflüssigkeit 8 (z. B. Isopropanol mit F 183K). Der Innenraum des gasdichten Mantels 4 steht über zumindest ein Ventil 9 entweder mit der über der Kühlflüssigkeit 8 herrschenden Atmosphäre (üblicherweise Umgebungsluft) in Verbindung (über 10) oder mit einer Druckgasquelle, insbesondere mit Druckluft über den Zweig 11.

Für die Kühl- bzw. Anreicherungsphase wird durch Verbindung des Innenraums des Mantels mit dem Anschluß 10 (üblicherweise Umgebungsluft) über das Ventil 9 dafür gesorgt, daß Kühlmittel 8 aus dem Kühlbad 7 über das Rohr 6 in den Mantel 4 eindringt und die Kühlfalle 1 gekühlt wird. Ein Temperaturfühler 12 dient der Temperaturüberwachung.

Der Mantel 4 ist vorzugsweise in der gezeigten Art als Doppelmantel mit einer oben und unten gelochten (13; 14) Innenwand 15 versehen, der während der Kühlphase niveaugleich mit Kühlflüssigkeit gefüllt ist, die für einen guten Wärmeaustausch mit der Umgebung sorgt.

Für die Desorption wird der Innenraum des Mantels 4 über das Ventil 9 mit Druckluft (Abzweig 11) verbunden, mit deren Hilfe das Kühlmittel nach unten aus dem Mantel getrieben wird, so daß dann eine Erwärmung der Kühlfalle stattfinden kann. Der ebenfalls geleerte Doppelmantel sorgt dann für eine Wärmeisolation des Mantelinnenraums gegenüber der umgebenden Kühlflüssigkeit.

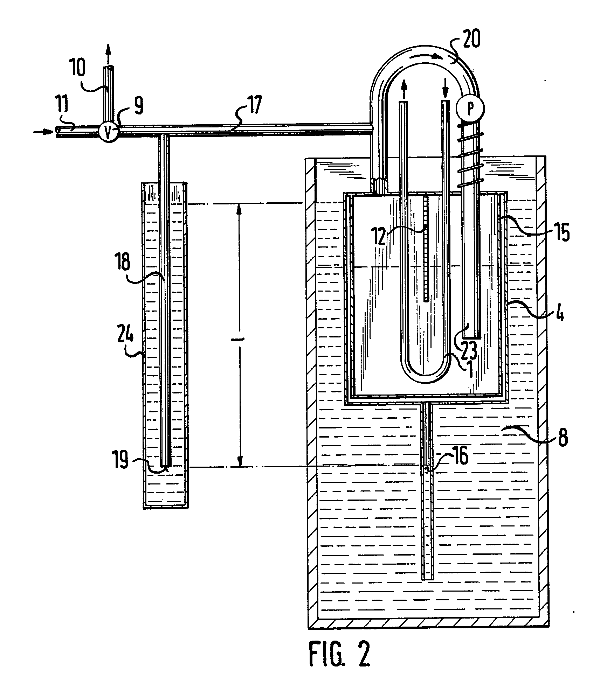

Die Einstellung des Flüssigkeitsspiegels 16 innerhalb des Verlängerungsrohres 6 (von z. B. 20 cm Länge) während der Desorptionsphase kann prinzipiell durch entsprechende Druckregulierung vor dem Ventil 9 erreicht werden, besonders zweckmäßig wird jedoch eine Anordnung zur Einstellung des Flüssigkeitsspiegels 16 mit gleichzeitiger Durchströmung des Mantels 4 vorgesehen, wie sie in Figur 2 angedeutet ist: Danach steht der mit Druckluft beaufschlagte Mantel 4 mit einem nach außen führenden Rohr 17 in Verbindung, dessen abwärts führender Schenkel 18 so weit in Flüssigkeit taucht, daß die über der unteren Öffnung 19 befindliche Flüssigkeitssäule der Kühlflüssigkeitshöhe 1 oberhalb des Flüssigkeitsspiegels 16 im Rohr 6 die Waage hält,

Um eine rasche Erwärmung des Innenraums des Mantels 4 und damit der Kühlfalle 1 zu erreichen, ist insbesondere eine Rohrschleife 20 vorgesehen, die eine Luftzirkulationspumpe 21 und eine Heizwicklung 22 umfaßt. Besonders zweckmäßig ist der in Förderrichtung hinter der Pumpe liegende Schenkel 23 bis in Nähe des Mantelbodens verlängert, wodurch eine rasche umfassende Erwärmung der Kühlfalle 1 erreicht wird. Der während der Desorptionsphase gasgefüllte Doppelmantel (4 mit 15) sorgt für eine Wärmeisolation zwischen Mantelinnenraum und Kühlflüssigkeit 8.

Während der Desorptionsphase perlt erwärmtes Gas durch die Flüssigkeit in Niveaugefäß 24, das mit einer angemessenen Flüssigkeit mit geringem Dampfdruck gefüllt sein kann.

Die vorstehend beschriebene Vorrichtung zur Zwischen anreicherung von Spurenstoffen ist insbesondere in Verbindung mit einer chromatographischen Trennsäule mit angeschlossenem Detektor nützlich.

## Ansprüche

1. Vorrichtung zur Zwischenanreicherung von Spurenstoffen aus einem Gasstrom in einer durchströmten ggf. Adsorbermaterial enthaltenden Kühlfalle, die während der Anreicherungsphase in Kühlflüssigkeit eines Kühlbades eintaucht und zur Desorption (ggf. erwärmter) Luft bzw. Gas ausgesetzt wird **dadurch gekennzeichnet,** daß die Kühlfalle (1) innerhalb des Kühlbades (7) von einem gasdichten Mantel (4) umschlossen wird, dessen unteres Ende eine insbesondere rohrförmig verlängerte Öffnung (5) hat und der über zumindest ein Ventil (9) mit der über der Kühlflüssigkeit (8) im Kühlbad (7) befindlichen Atmosphäre oder mit Druckluft bzw. -gas zu verbinden ist.

2. Vorrichtung nach Anspruch 1,

**gekennzeichnet durch**
Einrichtungen (21, 22) zur Umwälzung vorgewärmter Luft innerhalb des Mantels (4)

3. Vorrichtung nach Anspruch 2,
**gekennzeichnet durch**
eine Rohrschleife (20) mit Heizwicklung (22) und Zirkulationspumpe (21) in Verbindung mit Drucklufteinleitung (11) und Mantel (4).

4. Vorrichtung nach Anspruch 3,
**gekennzeichnet durch**
eine Verlängerung (23) des mit Heizwicklung (22) und Zirkulationspumpe (21) versehenen Schenkels der Rohrschleife (20), insbesondere bis in den Bodenbereich des Mantels (4) und eine Förderrichtung der Pumpe (21) in Richtung dieser Verlängerung (23).

5. Vorrichtung nach einem der vorangehenden Ansprüche, **gekennzeichnet durch**
eine Niveauregulierung im Mantel (4) bei Drucklufteinleitung mittels eines mit dem Innenraum des Mantels (4) in Verbindung stehenden nach außen führenden Rohres (17) mit einem abwärts führenden unten offenen Schenkel (18) der so weit in Flüssig keit taucht, daß die überstehende Flüssigkeitssäule mit der Flüssigkeitshöhe (1) über dem bei Drucklufteinleitung angestrebten Flüssigkeitsspiegel (16) im Verlängerungsrohr (16) des Mantels (4) im Gleichgewicht steht.

6. Vorrichtung nach einem der vorangehenden Ansprüche, **dadurch gekennzeichnet,**
daß die Kühlfalle (1) durch ein ggf. eine Schraubenwicklung umfassendes U-Rohr gebildet wird.

7. Vorrichtung nach einem der vorangehenden Ansprüche, **dadurch gekennzeichnet,**
daß Seitenwand und Boden des Mantels (4) als Doppelmantel ausgebildet sind mit Öffnungen (13; 14) der Innenwand (15) am oberen und unteren Ende.

8. Vorrichtung nach einem der vorangehenden Ansprüche, **gekennzeichnet durch**
eine Thermostatisierung der Kühlflüssigkeit (8) im Bereich von ca. 180K.

FIG. 1

FIG. 2